# EUROPÄISCHE PATENTSCHRIFT

(11) **EP 1 286 452 B1**
(45) Veröffentlichungstag und Bekanntmachung des Hinweises auf die Patenterteilung: **08.09.2004**
(21) Anmeldenummer: 02405612.9
(22) Anmeldetag: 17.07.2002
(51) Int. Cl.: H02K 15/095

(54) **Vorrichtung zum Wickeln eines mehrpoligen Stators**
Apparatus for winding a stator having a plurality of poles
Appareil pour bobiner un stator ayant une pluralité de poles

(30) Priorität: 06.08.2001 EP 01810760
(43) Veröffentlichungstag der Anmeldung: 26.02.2003
(73) Patentinhaber: ATS Wickel- und Montagetechnik AG, 5436 Würenlos (CH)
(72) Erfinder: Rieser, Urs, 5507 Mellingen (CH); Eugster, Beat, 8113 Boppelsen (CH); Wyss, Vinzenz, 5426 Lengnau (CH)
(74) Vertreter: Patentanwälte Breiter + Wiedmer AG

(56) Entgegenhaltungen:
- EP-A- 0 982 837
- EP-A- 1 049 237
- DE-A- 3 516 763
- PATENT ABSTRACTS OF JAPAN vol. 2000, no. 12, 3. Januar 2001 (2001-01-03) -& JP 2000 245121 A (SANKO KIKI KK), 8. September 2000 (2000-09-08)
- PATENT ABSTRACTS OF JAPAN vol. 2000, no. 14, 5. März 2001 (2001-03-05) -& JP 2000 324772 A (MITSUBISHI ELECTRIC CORP), 24. November 2000 (2000-11-24)

## Beschreibung

Die Erfindung betrifft eine Vorrichtung zum Wickeln von Draht um Polhörner eines mehrpoligen rotationssymmetrischen Stators.

Im Automobilbau ersetzen Elektronikmotoren in zunehmendem Masse die bis anhin bekannten Kollektormotoren. Von ihrer Bauart wird zwischen Innenläufer- und Aussenläufermotoren unterschieden. Der Blechschnitt des Stators eines Innenläufermotors entspricht annähernd dem Blechschnitt eines Asynchronmotors. Der Blechschnitt des Stators eines Aussenläufermotors entspricht weitgehend dem Ankerblechschnitt eines Kollektormotors.

Wünschenswert bei einem Stator eines Innen- oder Aussenläufermotors ist das Aufbringen einer gleichmässig über die gesamte Länge jedes Polhornes ver teilten, möglichst lagenweisen Wicklung.

Eine heute übliche Wickelvorrichtung weist eine als Hohlwelle ausgebildete Wickelstange auf, an deren Ende eine oder mehrere rechtwinklig angeordnete Drahtführerdüsen angebracht sind. Die Wickelstange ist derart gesteuert, dass die Drahtführerdüsen mit dem austretenden Wickeldraht eine Hubbewegung und der Stator eine Schwenkbewegung um etwa eine Polteilung ausführt. Dadurch wird der Draht in einer annähernd rechteckigen Wickelbahn um das entsprechende Polhorn geführt.

Damit sich die Wicklung nicht gehäuft an einer Stelle aufbaut, ist eine zusätzliche Bewegung der Drahtführerdüsen in radialer Richtung hin und zurück erforderlich,

Die Dokumente EP-A-1 049237 und EP-A- 0982837 beschreiben jeweils eine Vorrichtung zum Wickeln von Draht um Polhörner eines mehrpoligen rotationssymmetrischen Stators einer elektrischen Maschine, mit einem Drahtführer zur Ausgabe des Drahtes und zur Ausführung einer aus Einzelbewegungen zusammengesetzten Wickelbewegung um das zu umwickelnde Polhorn und einer Verschiebebewegung in Längsrichtung des Polhornes, wobei
- der Drahtführer zur Ausführung einer ersten Verschiebebewegung in vertikaler Richtung mit einer axial in vertikaler Richtung verschiebbaren Hubstange wirkverbunden ist,
- ein Schaltapparat zur Ausführung einer zweiten Verschiebe- bzw. Drehbewegung in horizontaler Richtung mit dem zu bewickelnden Stator wirkverbunden ist, und
- der Drahtführer zur Ausführung der Verschiebebewegung in der Längsrichtung des zu umwickelnden Polhornes entsprechender radialer Richtung mit einer in radialer Richtung verschiebbaren Wickelstange verbunden ist,

Aus PATENT ABSTRACTS OF JAPAN bezüglich JP-A-2000 245121 ist eine Wickelstange mit mehreren Drahtführern zum gleichzeitigen Umwickeln mehrerer Polhörner eines Stators bekannt.

Eine Vorrichtung der eingangs genannten Art, bei der jedoch alle Verschiebebewegungen vom Drahtführer ausgeführt werden, ist aus der DE-A- 3516763 bekannt.

Aus PATENT ABSTRACTS OF JAPAN bezüglich JP-A-2000 324772 ist es bekannt, zum gleichzeitigen Umwickeln jeweils eines Polhornes mehrerer Statoren mehrere Wickelarme mit je einem Drahtführer parallel zueinander und in Linie anzuordnen.

Der Erfindung liegt die Aufgabe zugrunde eine Vorrichtung der eingangs genannten Art zu schaffen, die möglichst einfach aufgebaut ist und zum gleichzeitigen Umwickeln mehrerer Polhörner eines Stators sowie zum gleichzeitigen Umwickeln jeweils eines Polhornes mehrerer Statoren geeignet ist. Zudem soll die Vorrichtung gleichermassen für das Bewickeln von Statoren für innen- und Aussenläufermotoren eingesetzt werden können.

Zur erfindungsgemässen Lösung der Aufgabe führt eine Vorrichtung mit den Merkmalen von Anspruch 1.

Bevorzugt ist jede Wickelstange über eine Radialführung in radialer Richtung verschiebbar, wobei zur Ausführung der Verschiebebewegung vorzugsweise eine erste Gewindespindel angeordnet ist. Jede erste Gewindespindel ist bevorzugt über eine biegsame Welle mit einem gemeinsamen Antriebsmotor verbunden.

Zweckmässigerweise ist die Halterung an einem entlang der Radialführung verschiebbaren Verstellblock festgelegt, wobei die Halterung bevorzugt entlang einer am Verstellblock angeordneten Vertikalführung in vertikaler Richtung verschiebbar ist und die erste Gewindespindel am Verstellblock angreift.

Die Hubstange ist bevorzugt über eine zweite Gewindespindel mit einem zweiten Antriebsmotor verbunden.

Der Schaltapparat ist während des Wickelvorganges bevorzugt mit einer Spannvorrichtung für den zu wickelnden Stator verbunden.

Die Erfindung bezieht sich weiterhin auf eine Verwendung der Vorrichtung mit den Mermalen von Anspruch 1.

Weitere Vorteile, Merkmale und Einzelheiten der Erfindung ergeben sich aus der nachfolgenden Beschreibung bevorzugter Ausführungsbeispiele sowie anhand der Zeichnung; diese zeigt schematisch in
- Fig. 1 eine Schrägsicht auf eine Wickelmaschine;
- Fig. 2 eine Schrägsicht auf ein Detail von Fig. 1;
- Fig. 3 eine Seitenansicht einer Verstelleinheit für eine Drahtführerdüse von Fig. 1 in vergrösserter Darstellung;
- Fig. 4 eine Schrägsicht auf die Wickelmaschine von Fig. 1 mit einer Paletten-Transporteinheit;
- Fig. 5 eine Seitenansicht eines Details von Fig. 4;
- Fig. 6 eine Ansicht von unten auf ein Detail von Fig. 1;
- Fig. 7,8 Darstellung der Relativbewegungen einer Drahtführerdüse während eines Wickelvorganges.

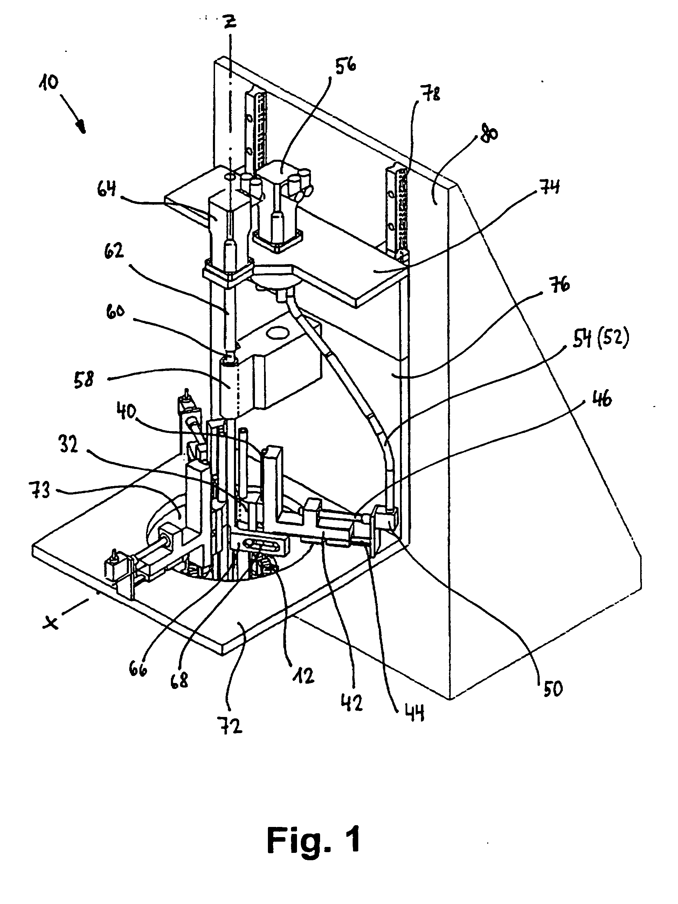

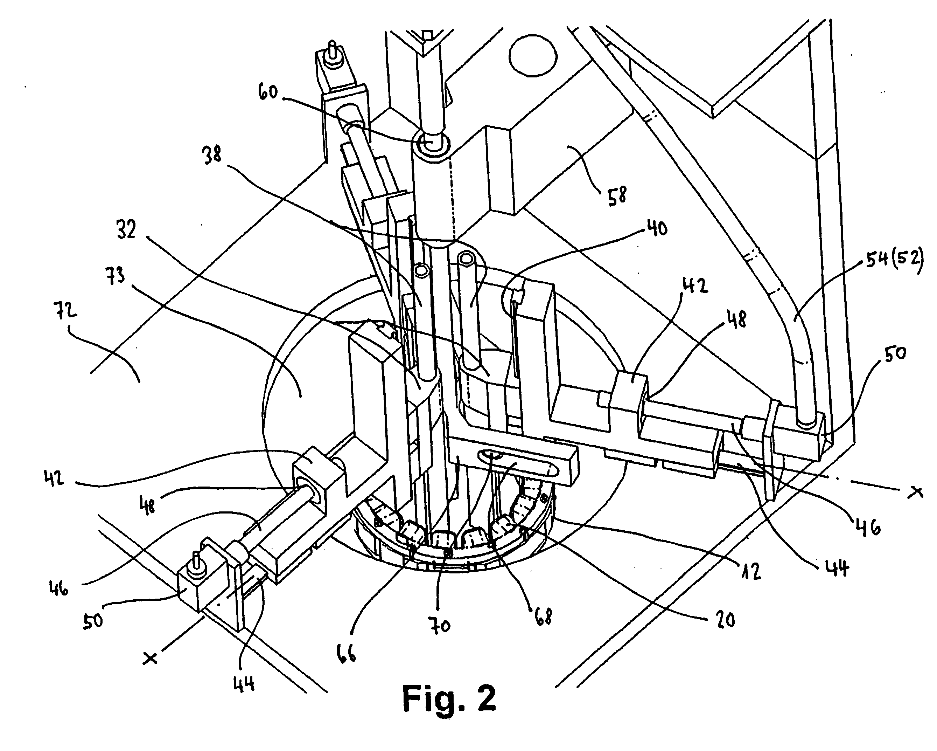

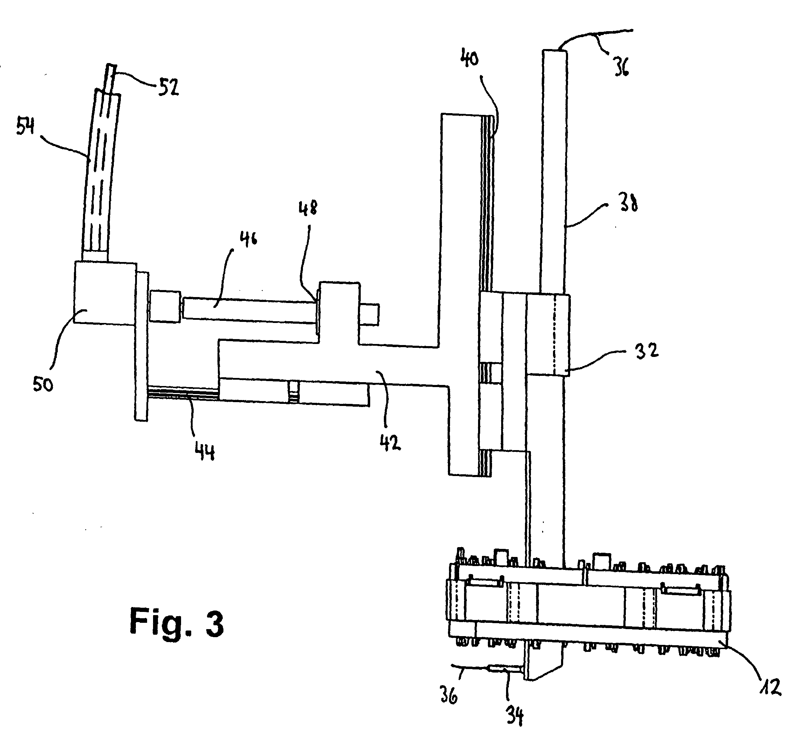

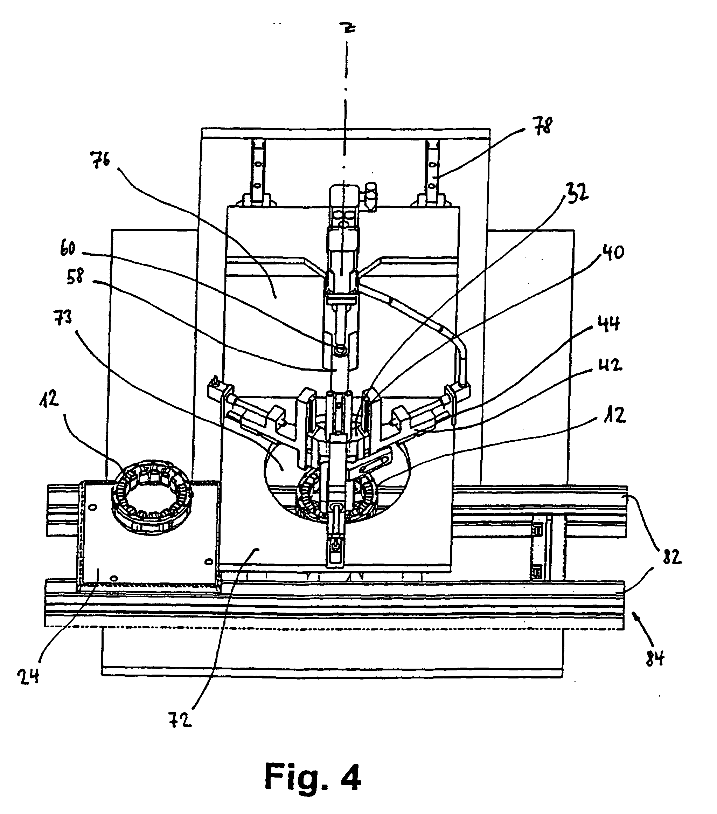

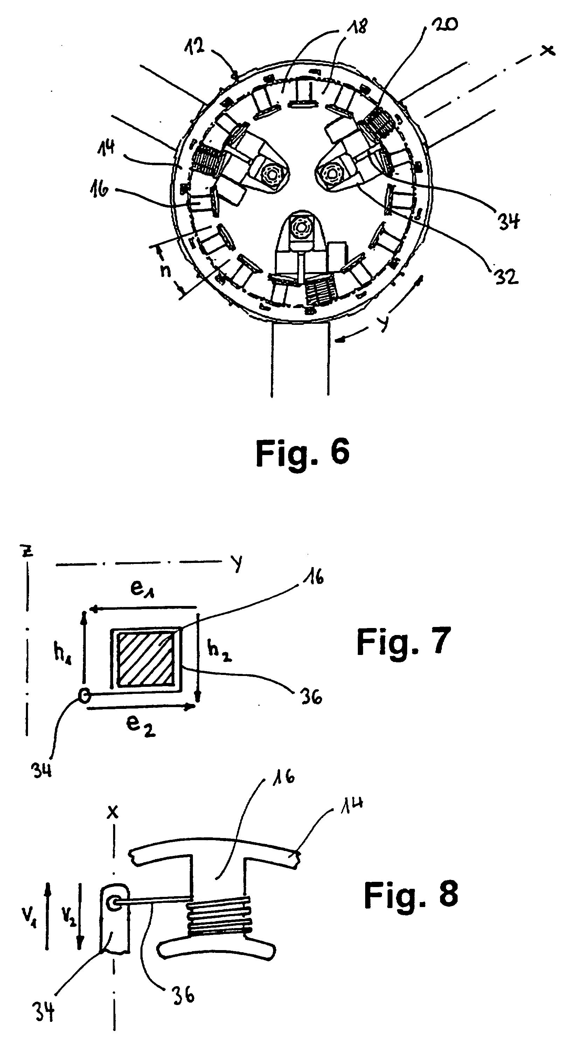

Eine in den Fig. 1 bis 8 dargestellte Wickelmaschine 10 ist zum Wickeln von mehrpoligen Statoren 12 vorgesehen. Der beispielsweise aus Fig. 6 ersichtliche Stator 12 besteht im wesentlichen aus einem ringförmigen Körper 14 mit von diesem radial nach innen abragenden Polhörnem 16, die durch Zwischenräume in Form von Axialnuten 18 voneinander getrennt angeordnet sind. Drei Wicklungen 20 sind bereits erfolgt. Der beispielhaft dargestellte 15-polige Stator 12 ist Teil eines Innenläufer-Elektronikmotors. Der Stator 12 wird durch Stanzpaketieren von identischen Blechlamellen zu einem Blechpaket hergestellt.

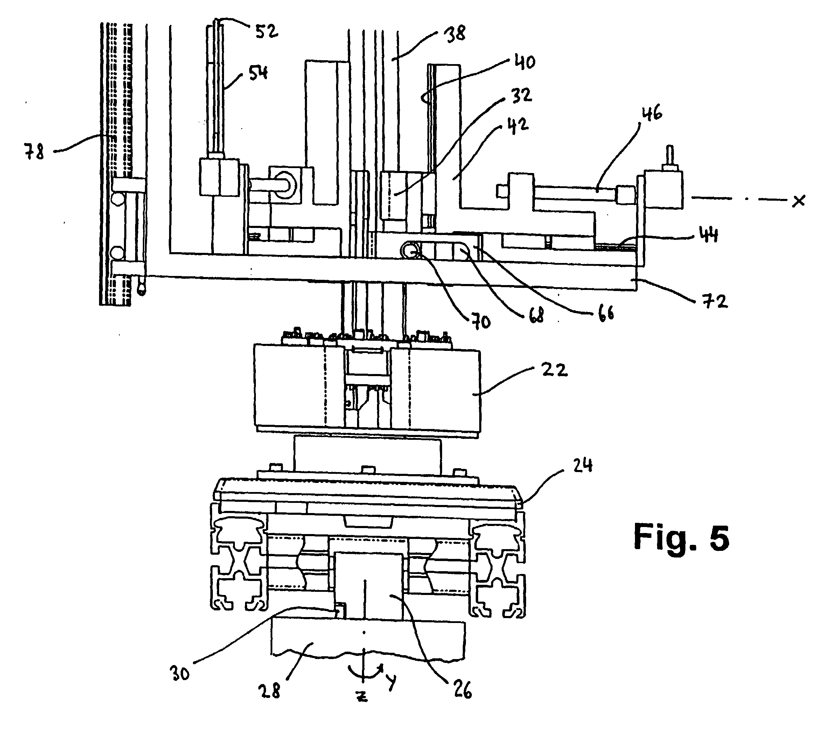

Wie aus Fig. 5 ersichtlich, ist der Stator 12 während des Wickelvorganges in einer Spannvorrichtung 22 fixiert. Eine in einer Transportpalette 24 drehbar gelagerte Welle 26 ist mit der Spannvorrichtung 22 starr verbunden. Das freie Ende der Welle 26 ist in der Wickelposition über einen Mitnehmer 30 mit einem Schaltapparat 28 verbunden. Der Schaltapparat 28 dient der Ausführung einer Drehbewegung des Stators 12 um seine Rotationsachse z. Die Transportpalette 24 wird über einen Palettenförderer 84 mittels Transportbändern 82 zur Wickelmaschine 10 hin und von dieser wieder weg geführt.

Eine Wickelstange 32 mit einer Drahtführerdüse 34 ist in einer senkrecht angeordneten, parallel zur Rotationsachse z des Stators 12 liegenden vertikalen Führungsschiene 40 gleitend gelagert. Die Drahtführerdüse 34 ist am unteren Ende des Wickelarms 32 festgelegt und weist bezüglich des Stators 12 und seiner Rotationsachse z radial nach aussen. Der obere Teil der Wickelstange 32 ist als Drahtleitrohr 38 ausgebildet. Der Wickeldraht 36 wird über das Drahtleitrohr 38 der Drahtführerdüse 34 zugeführt.

Die vertikale Führungsschiene 40 ist Teil eines Verstellblockes 42, welcher auf einer radialen ortsfesten Führungsschiene 44 in einer radialen Verschiebungsachse x in Richtung auf die der Rotationsachse des Stators entsprechende vertikale Achse z verschiebbar ist. Der Verstellblock 42 ist über eine in einem Gewinde 48 im Verstellblock 42 gelagerte erste Gewindespindel 46 auf der radialen Führungsschiene 44 verschiebbar. Die erste Gewindespindel 46 ist über ein Umlenkgetriebe 50 mit in einer Hülle 54 gelagerten biegsamen Welle 52 verbunden.

Im dargestellten Ausführungsbeispiel sind drei der vorstehend beschriebenen Einheiten zur gleichzeitigen Bewicklung von drei Polhörnern 16 eines Stators 12 in einem Winkel von jeweils 120° symmetrisch zueinander angeordnet. Jede der biegsamen Wellen 52 (in der Zeichnung ist nur einer biegsame Welle dar gestellt) ist mit einem zentralen ersten Antriebsmotor 56 verbunden.

In einem Lagerblock 58 ist eine in der vertikalen Achse z verschiebbare Hubstange 60 gelagert. Zur Ausführung von Hubbewegungen in der Achsenrichtung z ist die Hubstange 60 an ihrem oberen Ende als zweite Gewindespindel 62 ausgebildet, welche mit einem zweiten Antriebsmotor 64 zur Ausführung der Hubwegungen der Hubstange 60 verbunden ist.

Am unteren Ende der Hubstange 60 sind horizontal abragende Halterungsteile 66 mit einem ebenfalls in radialer Richtung x verlaufenden Langloch 68 angeordnet. Das Langloch 68 dient der Aufnahme von seitlich an der Wickelstange 32 angebrachten Führungsbolzen 70. Mit dieser Anordnung der Halterungsteile 66 wird eine Hubbewegung der Hubstange 60 gleichzeitig auf alle drei Wickelstangen 32 übertragen, was zu einer Synchronisierung der Hubwegungen aller Drahtführerdüsen 34 führt.

Die radialen Führungsschienen 44 für die Verstellblöcke 42 sind auf einer ersten Plattform 72 montiert. Diese Plattform 72 weist eine zentrale Öffnung 73 auf. Die vertikalen Führungsschienen 40 und die in diesen gleitend verschiebbaren Wickelstangen 32 durchsetzen die Öffnung 73. Die beiden Antriebsmotoren 56, 64 sind auf einer oberhalb der ersten Plattform 72 angeordneten zweiten Plattform 74 montiert. Die beiden Plattformen 72, 74 sind über eine Rückwand 76, an welcher der Lagerblock 58 für die Hubstange 60 festgelegt ist, zueinander in Abstand gehalten. Die Anordnung bestehend aus den beiden Plattformen 72, 74 und der Rückwand 76 ist über dritte Führungsschienen 78 an einer Montagewand 80 in vertikaler Richtung verschiebbar befestigt.

Wie in Fig. 7 dargestellt, erfolgt die Wicklung des Drahtes 36 durch eine annähernd rechteckförmige Bewegung der Drahtführerdüse 34 um das zu bewikkelnde Polhorn 16. Die Steuerung der Drahtführerdüse 34 erfolgt über die Hubbewegungen der Hubstange 60 und die Schaltbewegungen des Schaltapparates 28 um jeweils eine Polteilung n. Der Bewegungsablauf der Drahtführerdüse 34 zum Aufbringen einer Wicklungsschlaufe um das Polhorn 16 setzt sich aus den folgenden, nacheinander ausgeführten Einzelbewegungen zusammen:
- Erste Hubbewegung h₁ in vertikaler Richtung nach oben, ausgeführt durch eine entsprechende Hubbewegung der Hubstange 60
- Erste Schaltbewegung e₁ in horizontaler Richtung, ausgeführt durch eine entsprechende Schaltbewegung des Schaltapparates 28 in seiner Drehrichtung
- Zweite Hubbewegung h₂ vertikale nach unten, ausgeführt durch eine entsprechende Hubbewegung der hubstange 60
- Zweite Schaltbewegung e₂ in entgegengesetzter horizontaler Richtung, ausgeführt durch eine entsprechende Schaltbewegung des Schaltapparates 28.

Die genannten Einzelbewegungen der Drahtführerdüse 34 relativ zu den zu umwickelnden Polhörnern 16 werden hintereinander solange ausgeführt, bis die vollständige Wicklung 20 auf dem Polhorn 16 aufgebaut ist.

Fig. 8 zeigt die Verschiebebewegungen der Drahtführerdüse 34 in horizontaler Richtung x. Diese Verschiebebewegungen ergeben sich aus der gleitenden Verschiebung der Verstellblöcke 42 entlang den radialen Führungsschienen 44. Eine erste Verschiebebewegung v₁ erfolgt bezüglich der Rotationsachse z radial nach aussen, eine zweite Verschiebebewegung v₂ ist der ersten Verschiebebewegung v₁ entgegengesetzt. Die Verschiebebewegungen v₁, ₂ sind den senkrecht dazu ausgeführten Hub- und Schaltbewegungen h₁, ₂ bzw. e₁, ₂ überlagert. Sie erfolgen entsprechend der Wickelgeschwindigkeit zur Erzielung gleichmässiger Wickellagen kontinuierlich oder schrittweise zum Aufbau einer Wickellage radial nach aussen (v₁) und zur nachfolgenden Wicklung der nächsten Lage radial nach innen (v₂).

Obschon das in den Fig. 1 bis 8 dargestellte Ausführungsbeispiel eine Wickelmaschine für das Bewickeln von Statoren für Innenläufermotoren zeigt, ergibt sich aus der Betrachtung der Zeichnung ohne weiteres auch die Verwendung der Wickelmaschine zum Bewickeln von Statoren für Aussenläufermotoren. Die funktionelle Wirkungsweise der einzelnen Maschinenelemente bleibt dieselbe, nur deren Anordnung und Ausrichtung bezüglich des zu bewickelnden Stators muss angepasst werden.

Zum gleichzeitigen Umwickeln jeweils eines Polhornes mehrerer Statoren werden beispielsweise drei Statoren in Linie angeordnet. Jedem Stator ist eine Wickelstange mit einem Drahtführer zugeordnet. Die parallel zueinander stehenden Wickelstangen mit Drahtführer sind ebenfalls mit einer gemeinsamen Hubstange wirkverbunden.

## Patentansprüche

1. Vonrichtung zum gleichzeitigen Wickeln von Draht (36) um Polhörner (16) wenigstens eines mehrpoligen rotationssymmetrischen Stators (12) einer elektrischen Maschine, mit mehreren Drahtführen (34) zur Ausgabe des Drahtes (36) und zur Ausführung einer aus Einzelbewegungen zusammengesetzten Wickelbewegung um das zu umwickelnde Polhom (16) und einer Verschiebebewegung in Längsrichtung des Polhornes (16), wobei
- jeder Drahtführer (34) zur Ausführung einer ersten Verschiebebewegung in vertikaler Richtung (z) mit einer axial in vertikaler Richtung (z) verschiebbaren Hubstange (60) wirkverbunden ist,
- je ein Schaltapparat (28) zur Ausführung einer zweiten Verschiebe- bzw. Drehbewegung in horizontaler Richtung (y) mit je einem bewickelnden Stator (12) wirkverbunden ist, und
- jeder Drahtführer (34) zur Ausführung der Verschiebebewegung in der Längsrichtung des zu umwickelnden Polhornes (16) entsprechender radialer Richtung (x) mit je einer in radialer Richtung (x) verschiebbaren Wickelstange (32) verbunden ist, wobei
an der Hubstange (60) für jede Wickelstange (32) je ein Halterungsteil (66) mit einem in radialer Richtung (x) liegenden Langloch (68) angeordnet und ein an jeder Wickelstange (32) festgelegter Führungsbolzen (70) im Langloch (68) geführt ist.

2. Vorrichtung nach Anspruch 1, **dadurch gekennzeichnet, dass** jede Wickelstange (32) über eine Radialführung (44) in radialer Richtung (x) verschiebbar ist.

3. Vorrichtung nach Anspruch 2, **dadurch gekennzeichnet, dass** zur Ausführung der Verschiebebewegung in radialer Richtung (x) eine erste Gewindespindel (46) angeordnet ist.

4. Vorrichtung nach Anspruch 3, **dadurch gekennzeichnet, dass** jede erste Gewindespindel (46) über eine vorzugsweise biegsame Welle (52) mit einem gemeinsamen ersten Antriebsmotor (56) verbunden ist.

5. Vorrichtung nach einem der Ansprüche 2 bis 4, **dadurch gekennzeichnet, dass** jede Wickelstange (32) an einem entlang der Radialführung (44) verschiebbaren Verstellblock (42) festgelegt ist.

6. Vorrichtung nach Anspruch 5, **dadurch gekennzeichnet, dass** jede Wickelstange (32) entlang einer am Verstellblock (42) angeordneten Vertikalführung (40) in vertikaler Richtung (z) verschiebbar ist und die erste Gewindespindel (46) am Verstellblock (42) angreift.

7. Vorrichtung nach einem der Ansprüche 1 bis 6, **dadurch gekennzeichnet, dass** die Hubstange (60) vorzugsweise über eine zweite Gewindespindel (62) mit einem zweiten Antriebsmotor (64) verbunden ist.

8. Vorrichtung nach einem der Ansprüche 1 bis 7, **dadurch gekennzeichnet, dass** jeder Schaltapparat (28) während des Wickelvorganges mit einer Spannvorrichtung (22) für den zu bewickelnden Stator (12) verbunden ist.

9. Verwendung der Vorrichtung nach einem der Ansprüche 1 bis 8 zum gleichzeitigen Umwickeln mehrerer Polhörner (16) eines Stators (12).

10. Verwendung der Vorrichtung nach einem der Ansprüche 1 bis 8 zum gleichzeitigen Umwickeln jeweils eines Polhornes (16) mehrerer Statoren (12).

11. Verwendung nach Anspruch 10, **dadurch gekennzeichnet, dass** die Wickelstangen (32) parallel zueinander und in Linie angeordnet sind.

## Claims

1. Device for simultaneous winding wire (36) around pole horns (16) of a rotationally symmetrical multipole stator (12) of an electrical machine, with several wire guides (34) for the supply of the wire (36) and for performing a winding movement made up of individual movements around the pole horn (16) to be wound and a traversing movement in the longitudinal direction of the pole horn (16), in which
- to perform a first traversing movement in a vertical direction (z), each wire guide (34) is actively connected to a stroke rod (60) which is axially movable in the vertical direction (z),
- to perform a second traversing or rotational movement in a horizontal direction (y), an indexing device (28) each is actively connected to each stator (12) to be wound, and
- to perform the traversing movement in the longitudinal direction of the pole horn (16) to be wound, each wire guide (34) is connected to each a winding rod (32) which is movable in the radial direction (x), wherein
a mounting piece (66) each with an slot (68) lying in the radial direction (x) for each winding rod (32) is arranged on the stroke rod (60) and a guide pin (70) which is attached to each winding rod (32) is guided in the slot (68).

2. Device according to claim 1, **characterised in that** each winding rod (32) is movable in the radial direction (x) by means of a radial guide (44).

3. Device according to claim 2, **characterised in that** a first threaded spindle (46) is provided for the performance of the traversing movement in the radial direction (x).

4. Device according to claim 3, **characterised in that** each of the first threaded spindle (46) is connected with a first common drive motor (56) by means of a preferably flexible shaft (52).

5. Device according to claim 3 or 4, **characterised in that** each winding rod (32) is attached to an adjusting block (42) which is movable along the radial guide (44).

6. Device according to claim 5, **characterised in** each winding rod (32) is movable in the vertical direction (z) along a vertical guide (40) arranged on the adjusting block (42), and the first threaded spindle (46) engages the adjusting block (42).

7. Device according to any of claims 1 to 6, **characterised in that** the stroke rod (60) is connected to a second drive motor (64) preferably by means of a second threaded spindle (62).

8. Device according to any of claims 1 to 7, **characterised in that** during the winding process each indexing device (28) is connected to a clamping device (22) for the stator (12) to be wound.

9. Use of the device according to any of claims 1 to 8 for simultaneous winding of several pole horns (16) of a stator (12).

10. Use of the device according to any of claims 1 to 8 for simultaneous winding of one pole horn (16) each of several stators (12).

11. Use according to claim 10, **characterised in that** the winding rods (32) are arranged parallel to one another and in line.

## Revendications

1. Dispositif de bobinage simultané de fil de fer (36) autour des broches supports de bobinage (16) d'au moins un stator (12) multipolaire à symétrie de révolution d'une machine électrique, qui comporte plusieurs guides-fils (34) destinés à débiter le fil de fer (36), à exécuter un mouvement de bobinage décomposé en mouvements individuels autour de la corne polaire (16) à embobiner et à exécuter une translation dans le sens longitudinal de la broche support de bobinage (16),
- dans lequel, pour l'exécution d'une première translation dans le sens vertical (z), chaque guide-fil (34) est relié par couplage actif à une tige de montée (60) qui est axialement coulissante dans le sens vertical (z),
- dans lequel, pour l'exécution d'une deuxième translation ou deuxième rotation dans le sens horizontal (y), un mécanisme de couplage (28) est relié par couplage actif à chacun des stators (12) à embobiner,
- dans lequel, pour l'exécution de la translation dans le sens longitudinal de la broche support de bobinage (16) à embobiner qui est orientée dans le sens radial (x) correspondant, les guides-fils (34) sont reliés chacun à une tige d'enroulement (32) qui est coulissante dans le sens radial (x),
- et dans lequel, pour chacune des tiges d'enroulement (32), un élément de fixation (66) comportant un trou oblong orienté dans le sens radial (x) est agencé sur la tige de montée (60), un tourillon de guidage (70) fixé sur chacune des tiges d'enroulement (32) étant guidé dans le trou oblong.

2. Dispositif selon la revendication 1, **caractérisé en ce que** chaque tige d'enroulement (32) est coulissante dans le sens radial (x) au moyen d'une glissière radiale (44).

3. Dispositif selon la revendication 2, **caractérisé en ce qu'**il est prévu une première broche filetée (46), pour l'exécution de la translation dans le sens radial (x).

4. Dispositif selon la revendication 3, **caractérisé en ce que** chaque première broche filetée (46) est reliée à un premier moteur (56) commun, par l'intermédiaire d'un arbre (52), de préférence flexible.

5. Dispositif selon l'une quelconque des revendications 2 à 4, **caractérisé en ce que** chaque tige d'enroulement (32) est fixée sur un bloc de réglage (42) qui est coulissant le long de la glissière radiale (44).

6. Dispositif selon la revendication 5, **caractérisé en ce que** chaque tige d'enroulement (32) est coulissante dans le sens vertical (z), le long d'une glissière verticale (40) agencée sur le bloc de réglage (42), et **en ce que** la première broche filetée (46) agit sur le bloc de réglage (42).

7. Dispositif selon l'une quelconque des revendications 1 à 6, **caractérisé en ce que** la tige de montée (60) est reliée à un deuxième moteur (64), de préférence par l'intermédiaire d'une deuxième broche filetée (62).

8. Dispositif selon l'une quelconque des revendications 1 à 7, **caractérisé en ce que** chaque mécanisme de couplage (28) est relié, pendant le processus de bobinage, à un dispositif (22) de serrage du stator (12) à embobiner.

9. Utilisation du dispositif selon l'une quelconque des revendications 1 à 8 pour embobiner simultanément plusieurs broches supports de bobinage (16) d'un même stator (12).

10. Utilisation du dispositif selon l'une quelconque des revendications 1 à 8 pour embobiner simultanément une seule broche support de bobinage (16) de plusieurs stators (12).

11. Utilisation selon la revendication 10, **caractérisée en ce que** les tiges d'enroulement (32) sont disposées parallèlement entre elles et en ligne.
